# EUROPÄISCHE PATENTSCHRIFT

(11) **EP 0 892 693 B1**
(45) Veröffentlichungstag und Bekanntmachung des Hinweises auf die Patenterteilung: **06.10.1999**
(21) Anmeldenummer: 97920562.2
(22) Anmeldetag: 27.03.1997
(51) Int. Cl.: B23K 31/02, B23K 1/00, B23D 65/00, B23K 37/04

(54) **VERFAHREN UND VORRICHTUNG ZUM BEFESTIGEN VON ZÄHNEN AN ROHLINGEN**
PROCESS AND DEVICE FOR SECURING TEETH TO BLANKS
PROCEDE ET DISPOSITIF DE FIXATION DE DENTS SUR DES EBAUCHES

(30) Priorität: 10.04.1996 DE 19614197
(43) Veröffentlichungstag der Anmeldung: 27.01.1999
(73) Patentinhaber: Gerling Automation GmbH, 71546 Aspach (DE)
(72) Erfinder: GERLING, Holger, D-71546 Aspach (DE)
(74) Vertreter: KOHLER SCHMID + PARTNER
(86) Internationale Anmeldenummer: DE9700650
(87) Internationale Veröffentlichungsnummer: WO9737809

(56) Entgegenhaltungen:
- DE-A- 3 717 610

## Beschreibung

Die Erfindung betrifft eine Vorrichtung und ein Verfahren zum Verbinden von Zähnen mit einem Sägeblattgrundkörper, wobei die Vorrichtung mit einer Zahnzuführeinrichtung, einer Aufnahmeeinrichtung für einen Sägeblattgrundkörper und einer Befestigungseinrichtung ausgerüstet ist, über die die Zähne mit dem Sägeblattgrundkörper verbunden werden.

Eine derartige Vorrichtung ist durch die DE 37 17 610 C2 bekanntgeworden.

Mit der bekannten Vorrichtung können Hartmetallzähne an ein Kreissägeblatt automatisch angelötet werden. Über eine Dreheinrichtung wird jede Ausnehmung am Grundkörper des Kreissägeblatts bis zur Anlage auf einen Hartmetallzahn zugedreht und sobald der Hartmetallzahn am Grundkörper des Kreissägeblatts anliegt, wird der Zahn mit dem Grundkörper verlötet. Nachdem alle Zähne mit dem Grundkörper verlötet sind, wird das Sägeblatt auf beiden Seiten geschliffen, damit die Hartmetallzahnflanken nicht in einer unzulässigen Weise bzw. unregelmäßig über die Seitenflächen des Grundkörpers vorstehen. Werden die anzulötenden Zähne fehlerhaft am Grundkörper des Sägeblatts positioniert, so werden die Zähne unzureichend ausgerichtet mit dem Grundkörper verlötet, und es ist eine Nachbearbeitung mit erhöhtem Schleifmitteleinsatz notwendig, damit das erstellte Sägeblatt wie gewünscht ausgebildet ist. Weiterhin müssen die zum Einsatz kommenden Zähne ausreichend breit dimensioniert sein. Um eine Ausrichtung der Zähne gegenüber dem Grundkörper des Sägeblatts zu erreichen, wird der Grundkörper vor Beginn des Anlötprozesses ausgerichtet und anschließend werden alle Zähne angelötet. Bei diesem Vorgang entsteht unabhängig von der Güte des Lötvorganges eine Streubreite, mit der die Zähne am Grundkörper befestigt werden. Zur Zeit werden Genauigkeiten, d. h. Anlötungen erreicht, die bezogen auf eine vorbestimmte Lage am Sägeblattgrundkörper im Toleranzbereich von 0,05 bis 0,2 mm liegen. Anschließend werden die Zahnflanken überschliffen, damit entweder kein Überstand oder bevorzugt ein gleichmäßiger Überstand entsteht.

Aufgabe der vorliegenden Erfindung ist es, ein Verfahren und eine Vorrichtung zu schaffen, die es ermöglichen, Zähne an Sägeblättern derart zu befestigen, daß geringere Toleranzschwankungen als beim Stand der Technik erreicht werden und nachfolgende Bearbeitungsvorgänge entfallen oder zeitlich wesentlich minimiert werden können.

Die Erfindung wird bezüglich des Verfahrens dadurch gelöst, daß der Zahn bzw. die Zähne und der Sägeblattgrundkörper vermessen und anschließend die erfaßten Daten dahin gehend ausgewertet werden, daß eine Auswerteeinheit die Anordnung jedes einzelnen Zahns am Sägeblattgrundkörper festlegt, so daß der jeweilige Zahn unter der Maßgabe am Sägeblattgrundkörper befestigt wird, daß der Zahn entweder ansatzlos mit den Seitenflächen des Sägeblattgrundkörpers fluchtet oder unter Berücksichtigung der Abmessungen des Sägeblattgrundkörpers und jedes einzelnen Zahns mit minimierter Toleranz zu einer vorbestimmten Lage am Sägeblattgrundkörper angebracht ist.

Das erfindungsgemäße Verfahren hat den wesentlichen Vorteil, daß jeder einzelne Zahn einer Ausnehmung am Sägeblattgrundkörper individuell angepaßt werden kann. Der einzelne Zahn kann zentrisch an den Sägeblattgrundkörper angepaßt werden, weil alle lokalen Maße des Zahns sowie des Sägeblattgrundkörpers einer Auswerteeinheit bekannt sind, die die Koordination der Zuordnung steuert. Über die erfindungsgemäße Verfahrensweise lassen sich Toleranzschwankungen von ≤ 0,04 mm erreichen, d.h. wie der Zahn bezüglich einer Bezugsebene ausgerichtet ist. Mechanische Abnützungen, die sich im Dauerbetrieb einer Vorrichtung einstellen, können bis zu einem gewissen Grad ausgeglichen werden, weil die Lagepositionierung eines jeden Zahns zum Sägeblattgrundkörper und umgekehrt immer neu bestimmt wird. Es ist auch denkbar, daß die Zähne vorab vermessen werden, und dem Sägeblattgrundkörper nur optimal angepaßte Zähne zugeführt werden, damit keine bzw. nur eine geringe Nachbearbeitung notwendig ist. Die erfaßten Daten eines Zahns, beispielsweise Breite, Länge, Dikke, Schneidwinkel und die vergleichbaren Maße des Sägeblattgrundkörpers werden einer Auswerteeinheit zugeführt, die diese Daten auswertet und optimiert einander zuordnet. Sollten nach der Befestigung des Zahns am Sägeblatt im Bereich der Ausformung noch Nachbearbeitungsschritte notwendig sein, so können diese zeitlich erheblich reduziert werden.

Unter minimierter Toleranz zu einer vorbestimmten Lage am Sägeblattgrundkörper ist zu verstehen, daß der Zahn möglichst über beide Seitenflächen gleichmäßig weit übersteht oder daß die Zähne gleichmäßig weit über eine Seitenfläche vorstehen oder daß die Zähne links und rechts versetzt nach einem vorgegebenem Muster über die Seitenflächen vorstehen. Die Zähne können mit ihren Zahnflanken auch bündig mit einer Seitenfläche fluchten und über die andere Seitenfläche definiert vorstehen.

Besonders vorteilhaft kann das erfindungsgemäße Verfahren bei der Herstellung von kreisrunden Sägeblättern mit großen Durchmessern eingesetzt werden, weil es dort bekannterweise zu großen Toleranzschwankungen kommt, die mit dem erfindungsgemäßen Verfahren weitgehend ausgeglichen werden können. Eine größere Genauigkeit heißt in diesem Zusammenhang ein gleichmäßigerer Überstand aller Zähne. Ein daraus resultierendes geringeres Schleifaufmaß führt zu einem verringerten Schleifscheibenverschleiß. Dünne Sägeblätter lassen sich mit verbesserter Güte herstellen, weil beide radial verlaufende Zahnflanken auf beiden Seiten gleichzeitig überschliffen werden können.

In bevorzugter Ausgestaltung des erfindungsgemäßen Verfahrens werden die von der Auswerteeinheit zur Bestimmung jedes Zahns und jedes Sägeblattgrundkörpers erfaßten Daten in Signale umgesetzt, die Haltemittel des Zahns und/oder des Sägelbattgrundkörpers aktivieren, die jeden einzelnen Zahn vorbestimmt ausrichten, insbesondere zentrisch, und dem Sägeblattgrundkörper zuordnen. Die Haltemittel des Zahns bzw. des Sägeblattgrundkörpers sind kontrolliert verfahrbar und die Auswerteeinheit gibt den Befestigungsvorgang, z. B. Löten, erst frei, wenn der einzelne Zahn optimal am Sägeblattgrundkörper bzw. umgekehrt positioniert ist.

In weiterer bevorzugter Anwendung des erfindungsgemäßen Verfahrens erfolgt die ausgerichtete Zuordnung von einem Zahn zu dem Sägeblattgrundkörper dadurch, daß entweder der Zahn oder der Sägeblattgrundkörper oder der Zahn und der Sägeblattgrundkörper gleichzeitig verfahren werden. Mit diesen Maßnahmen wird die gewünschte Positionierung jedes einzelnen Zahns am Sägeblattgrundkörper und umgekehrt schnellstmöglich erreicht.

In weiterer Ausgestaltung des erfindungsgemäßen Verfahrens erfaßt die Auswerteeinheit die Breite jedes einzelnen Zahns und die Breite des Sägeblattgrundkörpers und über diese Kenngrößen wird die Anordnung jedes einzelnen Zahns am Sägeblattgrundkörper festgelegt. Dies hat den Vorteil, daß mit der Erfassung von nur zwei Parametern, die Steuerung der Lagepositionierung von Zahn zu Sägeblattgrundkörper sicher und präzise erfolgen kann. Mit dem erfindungsgemäßen Verfahren lassen sich die Breiten von Sägeblättern (Dicken, Stärken) nicht nur qualitativ, sondern auch quantitativ erfassen und manuelle Nachjustierungen bekannter Art, die beim Einsatz unterschiedlicher Sägeblattgrundkörper notwendig sind, entfallen. Unter Anwendung des erfindungsgemäßen Verfahrens wird die Breite des Sägeblattgrundkörpers und bei Bedarf die Breite des Sägeblattgrundkörpers im jeweiligen Zahnbereich nochmals getrennt erkannt und erfaßt und die Maschinenparamter werden automatisch an veränderte Verhältnisse angepaßt.

In weiterer bevorzugter Nutzung des erfindungsgemäßen Verfahrens wird erstens der einzelne Zahn jeweils seitlich von zwei verfahrbaren Haltebacken, insbesondere Keramikbacken, gehalten, die die Breite jedes einzelnen Zahns erfassen und dessen Kennwert der Auswerteeinheit übermitteln, zweitens wird jeweils die Breite des Sägeblattgrundkörpers im Bereich eines Zahns erfaßt und der dafür vorgesehene, mindestens eine Meßfühler ermittelt die Breite des Sägeblattgrundkörpers und die ermittelten Daten werden der Auswerteeinheit zugeführt. Der Sägeblattgrundkörper verfährt bei ortsfester Halterung des Zahns in eine Position, in der der Zahn mit dem Sägeblattgrundkörper verbunden wird. Mit den angegebenen Mitteln lassen sich die gewünschten, relevanten geometrischen Daten des Zahns und des Sägeblattgrundkörpers sicher ermitteln, so daß neben einer kostengünstigen Ermittlung der benötigten Daten auch eine störungsfreie Erfassung der Daten im Dauerbetrieb gewährleistet ist.

Bevorzugt werden in Verbindung mit dem erfindungsgemäßen Verfahren Zähne an kreis- oder bandförmigen Sägeblattgrundkörpern befestigt, die aus Hartmetall oder Diamant hergestellt sind. Der Sägeblattgrundkörper ist aus Metall, Kunststoff oder einem Verbundwerkstoff. Werden sehr hochwertige Zähne am Sägeblattgrundkörper befestigt, so bietet das erfindungsgemäße Verfahren erstens den Vorteil, daß bei der exakten Ausrichtung des jeweiligen Zahns zum Sägeblattgrundkörper nur geringste Nachbearbeitungen notwendig sind und zweitens müssen geringere Übermaße vorgehalten werden. Kann die Nachbehandlung an den Hartmetall- bzw. Diamantzähnen weitgehend entfallen, so kann man auf einen aufwendigen Schleifprozeß nahezu gänzlich verzichten und hochwertiges und teures Material wird am Zahn belassen und nicht abgeschliffen.

Bevorzugt werden die Zähne mit dem Sägeblattgrundkörper über einen Hartlötprozeß verbunden. Diese Verbindungstechnik hat sich bewährt und stellt auch unter starker Beanspruchung einen sicheren Materialverbund dar.

Erfindungsgemäß wird die Aufgabe bzgl. der Vorrichtung dadurch gelöst, daß die Zahnzuführeinrichtung Mittel zur Bestimmung der Zahnbreite jedes einzelnen Zahns aufweist, daß die Aufnahmeeinrichtung für den Sägeblattgrundkörper Mittel zur Bestimmung der Breite des Sägeblattgrundkörpers aufweist, daß die Vorrichtung eine Auswerteeinheit für die ermittelten Daten aus der Zahnzuführeinrichtung und der Aufnahmeeinrichtung für den Sägeblattgrundkörper aufweist und daß von der Auswerteeinheit gesteuerte Mittel zum Verfahren des Zahns und/oder des Sägeblattgrundkörpers vorgesehen sind, die unter Verwertung der Daten aus der Auswerteeinheit jeden einzelnen Zahn am Sägeblattgrundkörper vorbestimmt positionieren.

Die erfindungsgemäße Vorrichtung läßt sich übersichtlich aufbauen, so daß die Meßwertgeber und die Meßwertnehmer für den Zahn und den Sägeblattgrundkörper gut einsehbar sind. Über die Auswerteeinheit wird der Verfahrensprozeß gesteuert. Die mechanischen Mittel zum Halten der zu verbindenen Werkstoffe sowie die Meßwertaufnehmer bzw. -geber und die Mittel zum Verfahren des Zahns und/oder des Sägeblattgrundkörpers sind so ausgelegt, daß beispielsweise der Hartlötvorgang bei größter Präzision und in kürzester Arbeitszeit abgewickelt werden kann.

In einer weiteren bevorzugten Ausgestaltung der Vorrichtung sind in der Zahnzuführeinheit Haltebacken für den Zahn vorgesehen, wovon die Auswerteeinheit die Positionslage mindestens eines Haltebackens erfaßt und auswertet. In der Aufnahmeeinrichtung für den Sägeblattgrundkörper ist ein Meßfühler vorgesehen, der der Auswerteeinheit Daten übermittelt, die zur Bestimmung der Breite des Sägeblattgrundkörpers im Bereich eines jeweiligen Zahns geeignet sind. Die Aufnahmeeinrichtung für den Sägeblattgrundkörper weist von der Auswerteeinrichtung gesteuert mindestens einen Taster auf, der den Sägeblattgrundkörper in eine zum Zahn ausgerichtete exakt vorbestimmbare Position verfährt. Mit diesen Mitteln läßt sich das erfindungsgemäße Verfahren vorteilhaft ausführen.

Weiterhin ist es vorteilhaft, wenn der Taster den Sägeblattgrundkörper bei einem kreisförmig ausgebildeten Sägeblattgrundkörper längs der Rotationsachse und bei einem bandförmig ausgebildeten Sägeblattgrundkörper quer zur axialen Erstreckung des Bandes verfährt. Mit dieser Maßnahme kann der jeweilige Zahn ortsfest gehalten werden und der Sägeblattgrundkörper wird in eine Position verfahren, die gewährleistet, daß beispielsweise der Zahn zentrisch, d. h. auf beiden Seiten des Sägeblattgrundkörpers gleich weit überstehend bzw. fluchtend mit den Seitenflächen des Sägeblattgrundkörpers ausgerichtet ist.

Der Taster bzw. die Taster können sowohl Mittel zur Erfassung der Breite des Sägeblattgrundkörpers als auch Mittel zum Verfahren des Sägeblattgrundkörpers umfassen. Mit einer derartigen Ausgestaltung eines Tasters wird dem Taster eine Doppelfunktion zugeordnet. Die Anordnung der Komponenten im Bereich des Hartlötvorganges wird übersichtlicher.

Es versteht sich, daß erfindungsgemäß auch nur ein Parameter, nämlich am Zahn und/oder am Sägeblattgrundkörper gemessen und ausgewertet werden kann, damit die angestrebte Toleranzverbesserung von Zahn zu Sägeblattgrundkörper erreicht wird. Die verwendeten Zähne können auch vorgeschliffen und anschließend am Sägeblattgrundkörper befestigt werden. Letztendlich kann in Anwendung des erfindungsgemäßen Verfahrens und der erfindungsgemäßen Vorrichtung die Genauigkeit des Zahnüberstandes am Sägeblattgrundkörper erheblich verbessert werden.

Weitere Vorteile ergeben sich aus der Beschreibung der beigefügten Zeichnung. Nachstehend wird die Erfindung anhand der Figuren 1, 2 und 3 dargestellt und in Ausführungsbeispielen näher erläutert. Es zeigt:
- Fig. 1: ein Verfahrensfließbild des erfindungsgemäßen Verfahrens;
- Fig. 2: ein Kreissägeblatt im Ausschnitt von zwei Zähnen, wobei ein Zahn am Sägeblattgrundkörper befestigt ist und eine weitere gezeigte Ausnehmung am Sägeblattgrundkörper noch einen Zahn aufnehmen kann;
- Fig. 3: eine Vorderansicht einer erfindungsgemäßen Vorrichtung im Bereich des Hartlötvorganges mit erfindungsgemäßen Mitteln zum Erfassen der geometrischen Kenngrößen von Zahn und Sägeblattgrundkörper sowie mit erfindungsgemäßen Mitteln zum Verfahren von einem Zahn und/oder einem Sägeblattgrundkörper aufgrund einer Anweisung von einer Auswerteeinheit.

Die einzelnen Figuren der Zeichnung zeigen das erfindungsgemäße Verfahren bzw. die erfindungsgemäße Vorrichtung stark schematisiert und sind nicht maßstäblich zu verstehen Die Gegenstände der einzelnen Figuren sind teilweise stark vergrößert dargestellt, damit ihr Aufbau besser gezeigt werden kann.

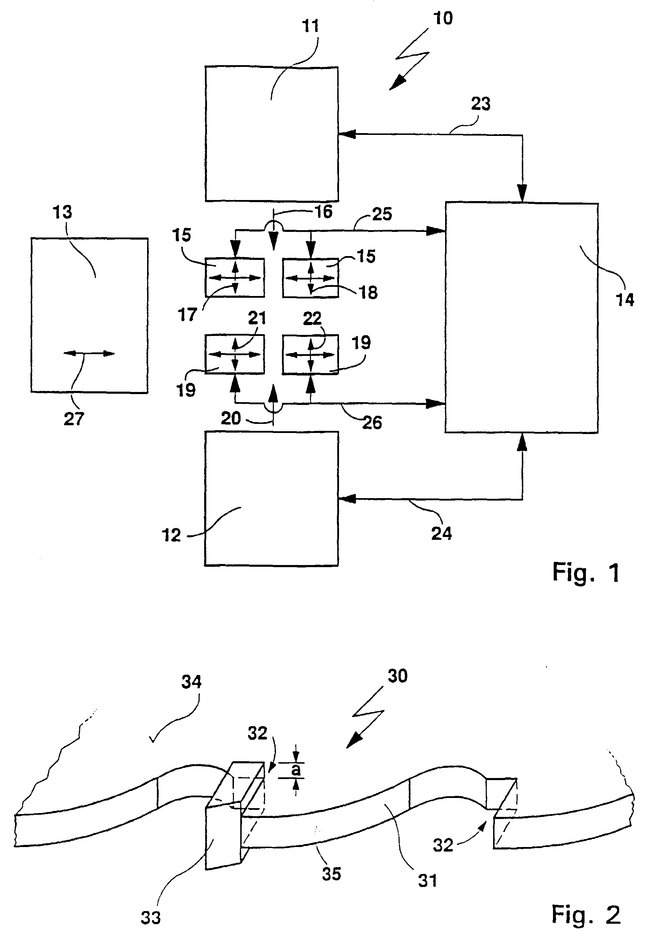

Fig. 1 zeigt ein Verfahrensfließbild 10, das den Verfahrensablauf des erfindungsgemäßen Verfahrens aufzeigt. Innerhalb einer Vorrichtung arbeiten eine Zahnzuführungseinrichtung 11, eine Aufnahmeeinrichtung 12 für einen Sägeblattgrundkörper, eine Befestigungseinrichtung 13 und eine Auswerteeinheit 14 zusammen. Haltebacken 15 wird in Pfeilrichtung 16 ein Zahn zugeführt, der von den Haltebacken 15 umklammert ausgerichtet, verschoben und ortsfest gehalten wird. Die Haltebacken 15 können zum Greifen des Zahns in Pfeilrichtungen 17, 18 verfahren werden. Im Bereich von Tastern 19, ist ein Sägeblattgrundkörper gehalten, der aus der Aufnahmeeinrichtung 12 in Pfeilrichtung 20 den Tastern 19 bzw. dem Zahn, der über die Haltebacken 15 gehalten wird, zugeführt wird. Die Taster 19 sind in Pfeilrichtungen 21, 22 verfahrbar. Die Haltemittel für den Sägeblattgrundkörper und den Zahn sind in dem Verfahrensfließbild 10 nicht dargestellt. Ebenfalls wurde auf eine Darstellung eines Zahns bzw. eines Sägeblattgrundkörpers verzichtet. Die Taster 19 und die Haltebacken 15 können die geometrischen Kenngrößen eines Zahns bzw. des Sägeblattgrundkörpers erfassen und über Informationsträger 23, 24, 25, 26 werden ermittelte Kenngrößen der Auswerteeinheit 14 zugeführt. Dabei müssen nicht alle Informationsträger gleichzeitig eingesetzt werden. In der Auswerteeinheit 14 werden die ermittelten Daten ausgewertet und über die Informationsträger 25, 26 werden die Haltebakken 15 und/oder die Taster 19 derart verfahren, daß der Zahn zum Sägeblattgrundkörper vorbestimmt positioniert ist. Der Zahn kann gegenüber dem Sägeblattgrundkörper zentrisch ausgerichtet sein, oder er ist gegenüber dem Sägeblattgrundkörper einseitig bündig angeordnet, oder er ist in einer vorbestimmten Art und Weise außermittig gegenüber dem Sägeblattgrundkörper positioniert. Ist der Zahn zum Sägeblattgrundkörper in einer gewünschten Form angeordnet, so verfährt die Befestigungseinrichtung 13 in Pfeilrichtung 27, um den Zahn am Sägeblattgrundkörper zu befestigen. Bevorzugt wird der Zahn an den Sägeblattgrundkörper angelötet.

Gemäß dem erfindungsgemäßen Verfahren zum Befestigen von Zähnen an Rohlingen wird der Zahn vermessen und bevorzugt wird dabei die Zahnbreite ermittelt. Ebenfalls wird der Sägeblattgrundkörper vermessen und auch hier wird bevorzugt die Breite des Sägeblattgrundkörpers ermittelt. Mit Mitteln der Vorrichtung wird der Zahn zentrisch zum Sägeblattgrundkörper ausgerichtet, wobei erfindungsgemäß jeder einzelne Zahn gegenüber dem Sägeblattgrundkörper neu ausgerichtet wird. Es ist auch möglich, daß der Sägeblattgrundkörper gegenüber dem Zahn ausgerichtet wird. Ist die gewünschte Ausrichtung abgeschlossen, so startet der Verbindungsprozeß. Der Zahn, bevorzugt einen Hartmetallzahn oder ein Diamantzahn, wird an den Sägeblattgrundkörper angelötet. Ist der Verbindungsprozeß abgeschlossen, so wird ein neuer Zahn über die Zahnzuführeinrichtung 11 in den Bereich des Verbindungsprozesses eingeführt und der Sägeblattgrundkörper wird zur nächsten Ausnehmung gedreht bzw. verschoben, damit an einer weiteren Stelle des Sägeblattgrundkörpers ein Zahn befestigt werden kann.

Fig. 2 zeigt einen Ausschnitt eines Kreissägeblatts 30, das kreisförmig aufgebaut ist. Von diesem Kreissägeblatt 30 ist ein Sägeblattgrundkörper 31 gezeigt. Von einem Sägeblattgrundkörper 31 sind zwei Ausnehmungen 32 (Plattensitze) in der Figur 2 dargestellt, wobei in einer Ausnehmung 32 ein Zahn 33 am Sägeblattgrundkörper 31 befestigt ist und an einer weiteren Ausnehmung 32 kann noch ein Zahn 33 befestigt werden. Der Sägeblattgrundkörper 31 ist von zwei Seitenflächen 34, 35 begrenzt, deren Beabstandung voneinander die Breite des Sägeblattgrundkörpers 31 definiert. Der in Figur gezeigte Zahn 33 ist zentrisch zum Sägeblattgrundkörper 31 angeordnet. Der Zahn 33 steht auf beiden Seiten im Abstand a über die Seitenflächen 34, 35 vor. Der Überstand des Zahns 33 über die Seitenflächen 34, 35 wird in einem nachfolgenden Bearbeitungsvorgang überschliffen. Bei dem Zahn 33 handelt es sich bevorzugt um einen Hartmetall- bzw. Diamantzahn.

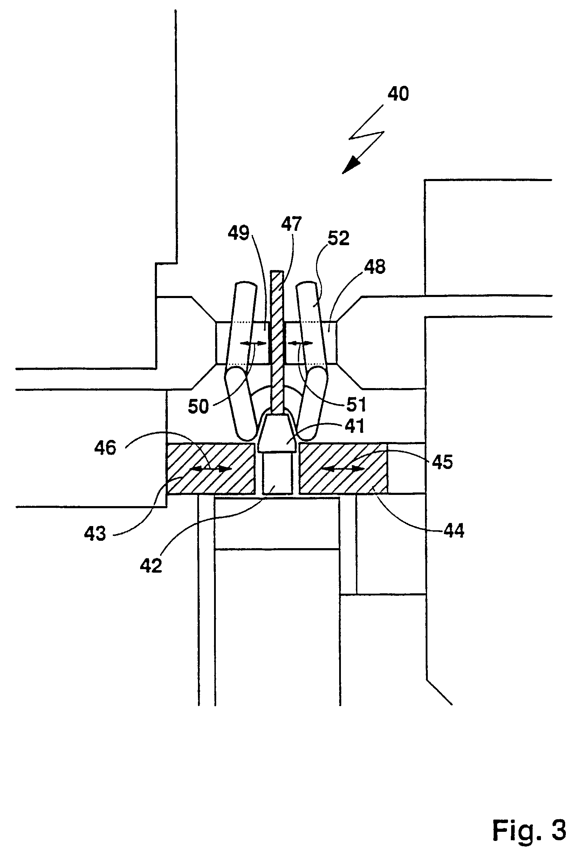

Fig. 3 zeigt einen Ausschnitt aus einer erfindungsgemäßen Vorrichtung 40 im Bereich eines Zahns 41, der auf einer Zahnauflage 42 aufliegt. Der Zahn ist seitlich von Haltebakken 43, 44 ortsfest fixiert. Die Haltebacken 43, 44 können in Pfeilrichtungen 45, 46 verfahren werden. Auf dem Zahn 41 liegt ein Sägeblattgrundkörper 47 im Bereich eines Plattensitzes auf dem Zahn 41 auf. Der Sägeblattgrundkörper 47 ist über in der Figur nicht gezeigte Mittel gehalten. Taster 48, 49 können die Breite des Sägeblattgrundkörpers 47 erfassen. Dabei können die Taster 48, 49 in Pfeilrichtungen 50, 51 verfahren. Über die Taster 48, 49 kann der Sägeblattgrundkörper 47 in seiner Zuordnung zum Zahn 41 verschoben werden. In der Figur sind noch Teile eines Induktors 52 gezeigt, der sowohl den Zahn wie auch Bereiche des Sägeblattgrundkörpers 47 erwärmt, damit der Zahn 41 über einen Lötvorgang am Sägeblattgrundkörper 47 befestigt werden kann.

Die Haltebacken 43, 44 wie auch die Taster 48, 49 sind mit einer in der Figur nicht dargestellten Auswerteeinheit verbunden. Über diese Auswerteeinheit werden die Haltebakken 43, 44 und die Taster 48, 49 angesteuert. Die Auswerteeinheit kann Signale von den Haltebacken 43, 44 und den Tastern 48, 49 aufnehmen, die geometrische Kenngrößen des Zahns 41 und des Sägeblattgrundkörpers 47 repräsentieren. Über die Auswerteeinheit sind die Haltebacken 43, 44 und die Taster 48, 49 ansteuerbar, so daß der Zahn 41 und/oder der Sägeblattgrundkörper 47 verschoben und aufeinander ausgerichtet werden können. Nachdem der Zahn 41 zum Sägeblattgrundkörper 47 eine optimierte Lage einnimmt, wird der Zahn 41 am Sägeblattgrundkörper 47 befestigt.

Mit dem vorgestellten Verfahren können Nachbearbeitungsprozesse, wie das Schleifen von überstehenden Zahnflanken am Sägeblatt, weitgehend vermieden werden. Die mit größerer Genauigkeit am Sägeblattgrundkörper ausgerichteten Zähne erzeugen ein geringeres Schleifaufmaß und damit wird beim Schleifprozeß der Schleifscheibenverbrauch verringert. Bei dünnen Sägeblättern lassen sich verbesserte Genauigkeiten erzielen und grundsätzlich können schmälere Zähne eingesetzt werden, weil mit einem geringeren Übermaß gearbeitet werden kann.

## Patentansprüche

1. Verfahren zum Befestigen von Zähnen an Rohlingen, insbesondere Sägeblattgrundkörpern, wobei der Zahn (33; 41) bzw. die Zähne und/oder der Sägeblattgrundkörper (31; 47) vermessen und anschließend die erfaßten Daten dahin gehend ausgewertet werden daß eine Auswerteeinheit (14) die Anordnung jedes einzelnen Zahns (33; 41) am Sägeblattgrundkörper (31; 47) festlegt, so daß der jeweilige Zahn (33; 41) unter der Maßgabe am Sägeblattgrundkörper (31; 47) befestigt wird, daß der Zahn (33; 41) entweder ansatzlos mit den Seitenflächen (34, 35) des Sägeblattgrundkörpers (31; 47) fluchtet oder unter Berücksichtigung der Abmessungen des Sägeblattgrundkörpers (31; 47) und jedes einzelnen Zahns (33; 41) mit minimierter Toleranz zu einer vorbestimmten Lage am Sägeblattgrundkörper (31; 47) angebracht wird.

2. Verfahren nach Anspruch 1, dadurch gekennzeichnet, daß die von der Auswerteeinheit (14) zur Bestimmung jedes Zahns (33; 41) und jedes Sägeblattgrundkörpers (31; 47) erfaßten Daten in Signale umgesetzt werden, die Haltemittel des Zahns (33; 41) und/oder des Sägeblattgrundkörpers (31; 47) aktivieren, die jeden einzelnen Zahn (33; 41) vorbestimmt ausgerichtet, insbesondere zentrisch, dem Sägeblattgrundkörper (31; 47) zuordnen.

3. Verfahren nach Anspruch 2, dadurch gekennzeichnet, daß die ausgerichtete Zuordnung von einem Zahn (33; 41) zu dem Sägeblattgrundkörper (31; 47) dadurch erfolgt, daß entweder der Zahn (33; 41) oder der Sägeblattgrundkörper (31; 47) oder der Zahn (33; 41) und der Sägeblattgrundkörper (31; 47) gleichzeitig verfahren werden.

4. Verfahren nach einem der Ansprüche 1 bis 3 dadurch gekennzeichnet, daß die Auswerteeinheit (14) die Breite jedes einzelnen Zahns (33; 41) und/oder die Breite des Sägeblattgrundkörpers (31; 47) erfaßt und über diese Kenngrößen die Anordnung jedes einzelnen Zahns (33; 41) am Sägeblattgrundkörper (31; 47) festgelegt wird.

5. Verfahren nach Anspruch 4, dadurch gekennzeichnet, daß erstens der einzelne Zahn (41) jeweils seitlich von zwei verfahrbaren Haltebacken (43, 44), insbesondere Keramikbacken, gehalten wird, die die Breite jedes einzelnen Zahns (41) erfassen und diesen Kennwert der Auswerteeinheit (14) übermitteln, daß zweitens jeweils die Breite des Sägeblattgrundkörpers (47) im Bereich eines Zahns (41) erfaßt wird und der dafür vorgesehene mindestens eine Meßfühler zum einen die Breite des Sägeblattgrundkörpers (47) ermittelt und die ermittelten Daten der Auswerteeinheit (14) zuführt und zum anderen den Sägeblattgrundkörper (47) bei ortsfester Halterung des Zahns (41) in eine Position verfährt, in der der Zahn (41) mit dem Sägeblattgrundkörper (47) verbunden wird.

6. Verfahren nach einem der Ansprüche 1 bis 5, dadurch gekennzeichnet, daß die Zähne (33; 41) Hartmetall- oder Diamantzähne sind, und der kreis- oder bandförmige Sägeblattgrundkörper (31; 47) aus Metall, Kunststoff oder einem Verbundwerkstoff hergestellt wird.

7. Verfahren nach einem der Ansprüche 1 bis 6, dadurch gekennzeichnet, daß die Zähne (33; 41) mit dem Sägeblattgrundkörper (31; 47) über einen Hartlötprozeß verbunden werden.

8. Vorrichtung zum Verbinden von Zähnen (33; 41) mit einem Sägeblattgrundkörper (31; 47), mit einer Zahnzuführeinrichtung (11), einer Aufnahmeeinrichtung (12) für einen Sägeblattgrundkörper (31; 47) und einer Befestigungseinrichtung (13) über die die Zähne (33; 41) mit dem Sägeblattgrundkörper (31; 47) verbunden werden, dadurch gekennzeichnet, daß die Zahnzuführeinrichtung (11) Mittel zur Bestimmung der Zahnbreite jedes einzelnen Zahns (33; 41) aufweist, und/oder die Aufnahmeeinrichtung (12) für den Sägeblattgrundkörper (31; 47) Mittel zur Bestimmung der Breite des Sägeblattgrundkörpers (31; 47) aufweist, daß die Vorrichtung eine Auswerteeinheit (14) für die ermittelten Daten aus der Zahnzuführeinrichtung (11) und/oder der Aufnahmeeinrichtung (12) für den Sägeblattgrundkörper (31; 47) aufweist und daß von der Auswerteeinheit (14) gesteuerte Mittel zum Verfahren des Zahns (33; 41) und/oder des Sägeblattgrundkörpers (31; 47) vorgesehen sind, mit denen unter Verwertung der Daten aus der Auswerteeinheit (14) jeder einzelne Zahn (33; 41) am Sägeblattgrundkörper (31; 47) vorbestimmt positionierbar ist.

9. Vorrichtung nach Anspruch 8, dadurch gekennzeichnet, daß in der Zahnzuführeinheit (11) Haltebacken (43, 44) für den Zahn (41) vorgesehen sind, wovon die Auswerteeinheit (14) die Positionslage mindestens eines Haltebackens (43, 44) erfaßt und auswertet, und/oder in der Aufnahmeeinrichtung (12) für den Sägeblattgrundkörper (47) ein Meßfühler vorgesehen ist, der der Auswerteeinheit (14) Daten übermittelt, die zur Bestimmung der Breite des Sägeblattgrundkörpers (47) im Bereich eines jeweiligen Zahns (41) geeignet sind und daß die Aufnahmeeinrichtung (12) für den Sägeblattgrundkörper (47) von der Auswerteeinrichtung (14) gesteuert mindestens einen Taster (48, 49) aufweist, durch den der Sägeblattgrundkörper (47) in eine zum Zahn (41) ausgerichtete Position verfahrbar ist.

10. Vorrichtung nach Anspruch 9, dadurch gekennzeichnet, daß der Taster in (48, 49) den Sägeblattgrundkörper (47) bei einem kreisförmig ausgebildeten Sägeblattgrundkörper (47) längs der Rotationsachse und bei einem bandförmig ausgebildeten Sägeblattgrundkörper quer zur axialen Erstreckung des Bandes verfahrbar ist.

11. Vorrichtung nach Anspruch 9 oder 10, dadurch gekennzeichnet, daß der Taster (48, 49) sowohl Mittel zur Erfassung der Breite des Sägeblattgrundkörpers (47) als auch Mittel zum Verfahren des Sägeblattgrundkörpers (47) umfaßt.

## Claims

1. Method for the mounting of teeth to blanks, in particular saw blade blanks, wherein the tooth (33; 41) or the teeth and/or the saw blade blank (31; 47) are measured and the measured data is subsequently analysed in such a fashion that an analysis unit (14) determines the configuration of each individual tooth (33; 41) on the saw blade blank (31; 47) so that each individual tooth (33; 41) can be attached to the saw blade blank (31; 47) such that the tooth (33; 41) is flush with the side surfaces (34, 35) of the saw blade blank (31; 47) or, is introduced with minimized tolerance at a predetermined position on the saw blade blank (31; 47) taking into consideration the dimensions of the saw blade blank (31; 47) and each individual tooth (33; 41).

2. Method according to claim 1, characterized in that the data recorded by the analysis unit (14) to define each tooth (33; 41) and each saw blade blank (31; 47) are converted into signals which activate the holding means of the tooth (33; 41) and/or the saw blade blank (31; 47) to align each individual tooth (33; 41) in a predetermined fashion, in particular centered, relative to the saw blade blank (31; 47).

3. Method according to claim 2, characterized in that the alignment of the tooth (33; 41) relative to the saw blade blank (31; 47) is effected by displacing either the tooth (33; 41) or the saw blade blank (31; 47) or the tooth (33; 41) and the saw blade blank (31; 47).

4. Method according to any one of the claims 1 through 3, characterized in that the analysis unit (14) determines the width of each individual tooth (33; 41) and/or the width of the saw blade blank (31; 47) and determines the configuration of each individual tooth (33; 41) on the saw blade blank (31; 47) using this data.

5. Method according to claim 4, characterized in that each individual tooth (41) is first held at its sides by two displaceable clamp jaws (43, 44), in particular ceramic jaws, which determine the width of each individual tooth (41) and transmit this characteristic value to the analysis unit (14) and, in each case, the width of the saw blade blank (47) in the vicinity of a tooth (41) is then recorded and at least one measuring sensor provided therefor determines the width of the saw blade blank (47) transmits these data to the analysis unit (14), and also displaces the saw blade blank (47), with the tooth (41) held stationary, into a position in which the tooth (41) is connected to the saw blade blank (47).

6. Method according to any one of the claims 1 through 5, characterized in that the teeth (33; 41) are hard metal or diamond teeth and that the circular or band-shaped saw blade blank (31; 47) is manufactured from metal, plastic or a composition material.

7. Method according to any one of the claims 1 through 6, characterized in that the teeth (33; 41) are connected to the saw blade blank (31; 47) by means of a hard soldering process.

8. Apparatus for the connection of teeth (33; 41) to a saw blade blank (31; 47) with a tooth introduction device (11), a receiving device (12) for a saw blade base body (31; 47), and a mounting device (13) by means of which the teeth (33; 41) are connected to the saw blade blank (31; 47), characterized in that the tooth introduction device (11) comprises means to determine the width of each individual tooth (33; 41), and/or the receiving device (12) for the saw blade blank (31; 47) comprises means to determine the width of the saw blade blank (31; 47) and the apparatus comprises an evaluation unit (14) for the data gained from the tooth introduction device (11) and/or the receiving device (12) for the saw blade blank (31; 47), and also comprising means controlled by the analysis unit (14) for displacing the tooth (33; 41) and/or the saw blade blank (31; 47) to position, using the data evaluated by the evaluation unit (14), each individual tooth (33; 41) to a predetermined location at the saw blade blank (31; 47).

9. Device according to claim 8, characterized in that clamp jaws (43, 44) are provided for the tooth (41) in the tooth introduction unit (11) by means of which the analysis unit (14) records and evaluates the position of at least one clamp jaw (43, 44), and/or a measurement sensor is provided in the receiving device (12) for the saw blade blank (47) which passes data to the analysis unit (14) suitable for the determination of the width of the saw blade blank (47) in the region of each particular tooth (41) and that the receiving device (12) for the saw blade blank (47) has at least one caliper (48, 49) controlled by the analysis unit (14) for positioning the saw blade blank (47) to an aligned state relative to the tooth (41).

10. Apparatus according to claim 9, characterized in that the calipers (48, 49) can be displaced towards the saw blade blank (47), in the event of a circular saw blade blank (47), along the rotational axis, and in the event of a band-shaped saw blade blank, transverse to the axial extension of the band.

11. Apparatus according to claim 9 or 10, characterized in that the calipers (48, 49) comprise both means to determine the width of the saw blade blank (47) as well as means for displacing the saw blade blank (47).

## Revendications

1. Procédé pour fixer des dents sur des ébauches, notamment des corps de base de lames de scie, selon lequel on mesure la dent (33 ; 41) ou les dents et/ou le corps de base (31 ; 47) de la lame de scie et ensuite les données détectées sont exploitées de telle sorte qu'une unité d'exploitation (14) fixe la disposition de chaque dent individuelle (33 ; 41) sur le corps de base (31 ; 47) de la lame de scie de telle sorte que la dent considérée (33 ; 41) est fixée sur le corps de base (31 ; 47) de la lame de scie de telle sorte que la dent (33 ; 41) est alignée, sans disposition en saillie, avec les surfaces latérales (34, 35) du corps de base (31 ; 47) de la lame de scie ou, compte tenu des dimensions du corps de base (31 ; 47) de la lame de scie et de chaque dent individuelle (33 ; 41), est montée avec une tolérance réduite par rapport à une position prédéterminée sur le corps de base (31 ; 47) de la lame de scie.

2. Procédé selon la revendication 1, caractérisé en ce que les données, qui sont détectées par l'unité d'exploitation (14) pour déterminer si chaque dent (33 ; 41) et chaque corps de base (31 ; 47) de lame de scie, sont convertis en des signaux, qui activent des moyens de retenue de la dent (33 ; 41) et/ou du corps de base (31 ; 47) de la lame de scie, qui associent chaque dent (33 ; 41), d'une manière alignée de façon prédéterminée, notamment d'une manière centrée, au corps de base (31 ; 47) de la lame de scie.

3. Procédé selon la revendication 2, caractérisé en ce que l'association alignée d'une dent (33 ; 41) avec le corps de base (31 ; 47) de la lame de scie est obtenue par le fait que la dent (33 ; 41) ou le corps de base (31 ; 47) de la lame de scie ou la dent (33 ; 41) et le corps de base (31 ; 47) de la lame de scie sont déplacés simultanément.

4. Procédé selon l'une des revendications 1 à 3, caractérisé en ce que l'unité d'exploitation (14) détecte la largeur de chaque dent individuelle (33 ; 41) et/ou la largeur du corps de base (31 ; 47) de la lame de scie et que la disposition de chaque dent individuelle (33 ; 41) sur le corps de base (31 ; 47) est fixée par l'intermédiaire de ces grandeurs caractéristiques.

5. Procédé selon la revendication 4, caractérisé en ce qu'en premier lieu la dent individuelle (41) est retenue respectivement latéralement par deux mâchoires déplaçables de retenue (43, 44), notamment des mâchoires céramiques, qui détectent la largeur de chaque dent individuelle (41) et retransmettent ces valeurs caractéristiques à l'unité d'exploitation (14), qu'en second lieu la largeur du corps de base (47) de la lame de scie est détectée au niveau d'une dent (41) et que le au moins un capteur de mesure prévu à cet effet d'une part détermine la largeur du corps de base (47) de la lame de scie et envoie les données déterminées à l'unité d'exploitation (14), et d'autre part déplace le corps de base (47) de la lame de scie tout en retenant de façon fixe la dent (41) dans une position dans laquelle la dent (41) est reliée au corps de base (47) de la lame de scie.

6. Procédé selon l'une des revendications 1 à 5, caractérisé en ce que les dents (33 ; 41) sont des dents en métal dur ou en diamant, et que le corps de base (31 ; 47) de la lame de scie en forme de cercle ou de bande est réalisé en un métal, une matière plastique ou un matériau composite.

7. Procédé selon l'une des revendications 1 à 6, caractérisé en ce que les dents (33 ; 41) sont reliées au corps de base (31 ; 47), de la lame de scie au moyen d'un processus de brasage dur.

8. Dispositif pour relier des dents (33 ; 41) à un corps de base (31 ; 47) comportant un dispositif (11) d'amenée des dents, un dispositif de réception (12) pour un corps de base (31 ; 47) de la lame de scie et un dispositif de fixation (13), au moyen duquel les dents (33 ; 41) sont reliées au corps de base (31 ; 47) de la lame de scie, caractérisé en ce que le dispositif (11) d'amenée des dents comporte des moyens pour déterminer la largeur de chaque dent individuelle (33 ; 41), et/ou le dispositif de réception (12) comporte, pour le corps de base (31 ; 47) de la lame de scie, des moyens pour déterminer la largeur du corps de base (31 ; 47) de la lame de scie, que le dispositif comporte une unité d'exploitation pour les données déterminées provenant du dispositif (11) d'amenée de la dent et/ou du dispositif de réception (12) pour le corps de base (31 ; 47) de la lame de scie, et que des moyens commandés par l'unité d'exploitation (14) sont prévus pour déplacer la dent (33 ; 41) et/ou le corps de base (31 ; 47) de la lame de scie et à l'aide desquels, moyennant l'utilisation des données provenant de l'unité d'exploitation (14), chaque dent individuelle (33 ; 41) peut être positionnée d'une manière prédéterminée sur le corps de base (31 ; 47) de la lame de scie.

9. Dispositif selon la revendication 8, caractérisé en ce que dans l'unité (11) d'amenée des dents sont prévues des mâchoires de retenue (43, 44) servant à retenir la dent (41), la position d'au moins l'une des mâchoires de retenue (43, 44) étant détectée et exploitée par l'unité d'exploitation (14), et/ou que dans le dispositif de réception (12) pour le corps de base (47) de la lame de scie est prévu un capteur de mesure, qui transmet à l'unité d'exploitation (14) des données qui conviennent pour la détermination de la largeur du corps de base (47) de la lame de scie dans la zone d'une dent respective (41) et que le dispositif de réception (12) pour le corps de base (47) de la lame de scie comporte au moins un palpeur (48, 49), qui est commandé par le dispositif d'exploitation (14) et à l'aide duquel le corps de base (47) de la lame de scie peut être amené dans une position alignée par rapport à la dent (41).

10. Dispositif selon la revendication 9, caractérisé en ce que le palpeur (48, 49) pour le corps de base (47) de la lame de scie est déplaçable le long de l'axe de rotation, dans le cas d'un corps de base (47) de la lame de scie de forme circulaire, et transversalement par rapport à l'étendue axiale de la bande, dans le cas d'un corps de base de la lame de scie agencé en forme de bande.

11. Dispositif selon la revendication 9 ou 10, caractérisé en ce que le palpeur (48, 49) comprend aussi bien des moyens pour détecter la largeur du corps de base (47) de la lame de scie que des moyens pour déplacer le corps de base (47) de la lame de scie.
